(19) Europäisches Patentamt
European Patent Office
Office européen des brevets

(11) **EP 2 144 470 A1**

(12) **EUROPEAN PATENT APPLICATION**

(43) Date of publication:
**13.01.2010 Bulletin 2010/02**

(51) Int Cl.:
**H04W 72/04** *(2009.01)*

(21) Application number: **08104468.7**

(22) Date of filing: **19.06.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Nokia Siemens Networks Oy**<br>**02610 Espoo (FI)** | (72) Inventors:<br>• **Siltala, Sami**<br>**90450 Kempele (FI)**<br>• **Sipilä, Kari**<br>**01690 Vantaa (FI)**<br><br>(74) Representative: **Bruglachner, Thomas E.**<br>**Nokia Siemens Networks Oy**<br>**COO RTP IPR / Patent Administration**<br>**80240 Munich (DE)** |

(54) **Dynamically adjusting the size of a zone of a communication frame**

(57) A method, a device and a communication system are provided for dynamically adjusting the size of a zone of a communication frame.

# Fig.4

Preamble   FCHMAPs   N OFDMA symbols available for user data

time

Logical subchannel number (frequency)

Default PUSC (=non STC) zone

STC zone

adjustable zone boundary

DL subframe

**Description**

The invention relates to a method and to a device for setting and/or adjusting a zone and communication system comprising such a device.

WiMAX, the Worldwide Interoperability for Microwave Access, is a telecommunications technology aimed at providing wireless data over long distances in a variety of ways, from point-to-point links to full mobile cellular type access.

The Mobile WiMAX standard defines a frame structure such that either the downlink or the uplink subframes or both can be further time divided into zones, wherein for each zone a subset of the features introduced by the standard can be used.

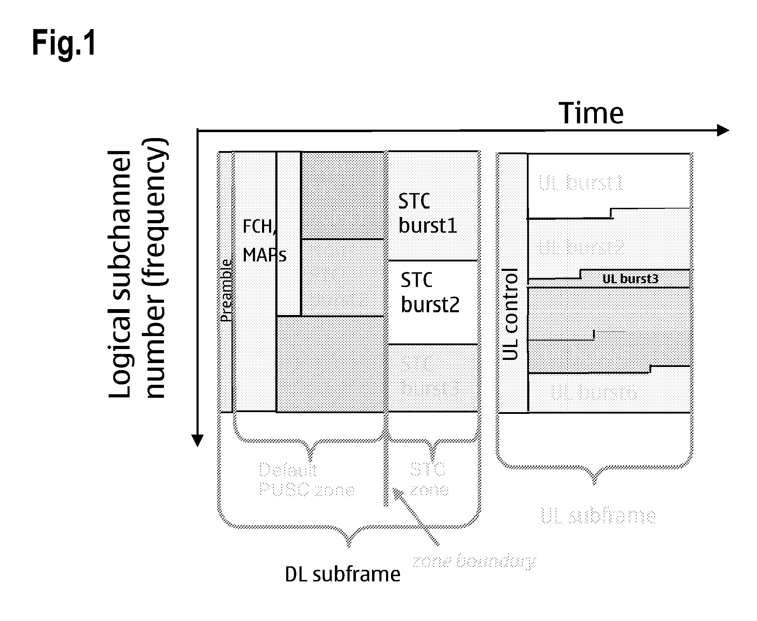

In particular, downlink multiple-input-multiple-output (MIMO) transmission or space-time coding (STC) transmission in WiMAX terms, needs to be performed within an STC zone, which on the other hand cannot be used for non-STC transmission. The non-STC transmission needs to be performed in another zone, for example in the first, default Partial Usage of Subchannels (PUSC) zone. This is indicated in **Fig.1,** where the STC and non-STC zones are separated by a boundary in a time-subchannel frame.

Also different types of subcarrier permutations, e.g. PUSC, FUSC, AMC may be separated by zones, i.e. by means of time division.

In particular, AMC subcarrier permutation is an option enabling advanced packet scheduling and signal processing techniques such as frequency selective scheduling, beamforming and closed loop MIMO. Similarly to STC, AMC transmission requires a specific AMC zone. Hence, not all data can be transmitted in such AMC zone.

According to Fig.1, the WiMAX standard requires a default PUSC zone in the beginning of a DL subframe. This zone includes broadcast information such as the frame control header (FCH), DL-MAP and UL-MAP messages that are MAC messages defining the data bursts within the DL and UL subframes as well as all data that cannot be transmitted in STC format, e.g. data required for non-STC (=non-MIMO) capable MSs.

The STC bursts are transmitted in an STC-zone. In WiMAX Standard Release 1 the STC includes a diversity mode (Matrix A) and spatial multiplexing mode (Matrix B) which are both transmitted in the STC-zone. A pilot subcarrier structure of the STC zone differs from a pilot subcarrier structure utilized in the default PUSC zone. The pilot structure in the STC zone supports different physical layer symbols transmitted from two antennas of a base transceiver station (BTS) thereby enabling an improved degree of reception by the MS. The minimum size of an STC zone amounts to four OFDMA symbols.

The zone boundary itself is broadcast to the MSs in every frame comprising an STC zone. Such information is provided in one of the DL-MAP information elements in IEEE 802.16e-2005, i.e. a STC/DL Zone Switch.

It is noted that the behavior of the AMC zone is similar to the STC zone. Hence, a first zone is a default PUSC zone, but AMC transmissions need to be provided in an AMC zone, where slot and pilot structure differs from the default PUSC zone.

Furthermore, a combined STC/AMC zone can be used to support MIMO with AMC subcarrier permutation.

Packet scheduling and frame allocation functionalities of the BTS may fill in the DL and UL subframes as tight as possible depending on the number of MSs simultaneously requesting capacity and size, priority and type of data packets queuing the access over the air interface. The frame filling challenge is far from trivial even in case of a single zone. In case of STC and/or AMC, at least two zones are created which means that the frame filling needs to be processed for at least two such zones.

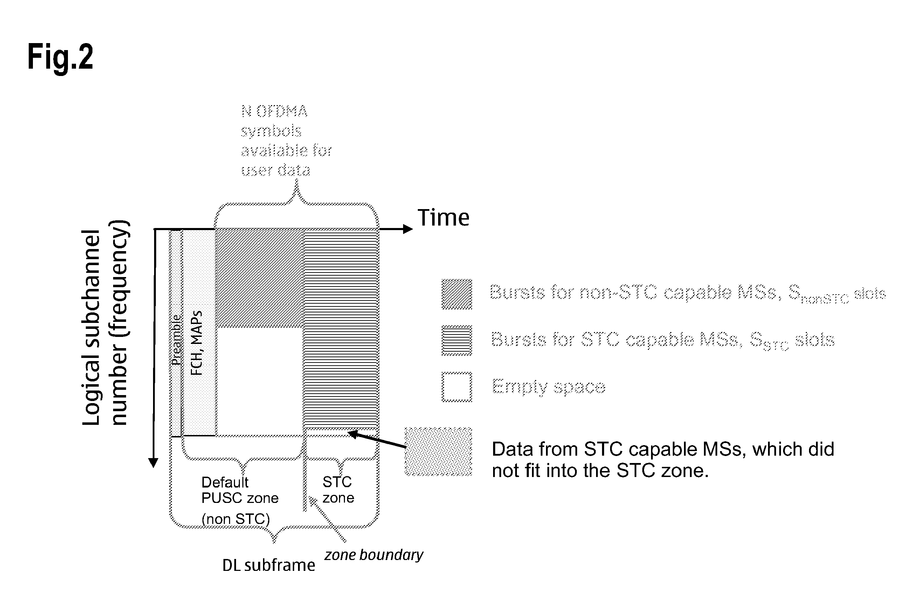

**Fig.2** exemplarily visualizes the problem of filling a DL subframe. A DL subframe with an STC zone is allocated. Data bursts from non-STC capable MSs are allocated into the non-STC zone and data bursts from STC capable MSs are allocated to the STC zone. There are further STC compliant data bursts from STC capable MSs in a buffer that do not fit into the STC zone. Hence, according to the example shown in Fig.2, the STC zone is nearly full but there is a significant amount of empty space in the non-STC zone, which is wasted considering the overall need for traffic.

The **problem** to be solved is to overcome the disadvantages pointed out above and in particular to provide an efficient support of mobile stations that are capable of space time coding and/or AMC as well as mobile stations that are not capable of such STC/AMC scheme.

In addition to STC and/or AMC the problem and its solution is valid to any other feature set, say Z, which requires a particular transmission format different from the default transmission format.

This problem is solved according to the features of the independent claims. Further embodiments result from the depending claims.

In order to overcome this problem, a method is provided for adjusting an zone in a communication network,

- said zone comprising a Z zone and a non-Z zone,
- wherein one or both of the Z zone and the non-Z zone is or are dynamically adjusted.

The Z zone can be any zone defined as an STC zone, an AMC zone or a combined STC-AMC zone.

It is noted that several sub-zones (even more than two zones) may be provided within said zone. For example, said zone may comprise several Z zones wherein each Z zone can be of different type. Furthermore, each Z zone may result in a non-Z zone also provided within the zone. It is also an option to divide a particular Z zone, e.g., a STC zone to an STC/PUSC zone and to an STC/AMC zone. Moreover, the non-Z zone, e.g., a non-STC zone could be divided into a (default) PUSC zone at the beginning followed by an AMC (without STC) zone.

Preferably, the size of said Z zone and/or the size of the non-Z zone is/are set and/or adjusted. Such configuration of the Z zone may be provided dynamically and/or iteratively according to a predetermined schedule. It may in particular be done on a substantially regular basis, e.g., with each frame, wherein such frame is in particular a downlink or uplink subframe comprising OFDMA symbols that may comprise user data.

It is noted that said Z zone can be any zone utilizing a particular transmission format, wherein said Z zone may be (dynamically) adjusted.

Such Z zone refers in particular to any kind of zone, wherein the transmission uses a certain feature set Z supported by the standard and wherein the default transmission format differs from Z.

In particular Multiple Input Multiple Output (MIMO) processing requires an STC zone and AMC subcarrier permutation requires and AMC zone.

A mobile station (MS) may be any device capable of processing information provided by a base station or a base transceiver station, in particular processing WiMAX data.

This approach relates in particular to a WiMAX base transceiver station (BTS). Advantageously, a capacity of the network is enhanced when Space Time Coding (STC, i.e. Multiple Input Multiple Output, MIMO) and non-STC capable terminals are present within the network.

Similarly, a capacity of the network is enhanced when AMC and non-AMC capable terminals are present within the network.

Advantageously, the zone comprises a zone boundary between a default PUSC zone (as the non-Z zone) and the Z zone. According to the approach provided, such zone boundary can be set, configured and/or adjusted. A flexible, dynamic setting of the zone boundary may in particular be based on an actual traffic situation.

This approach in particular utilizes and/or may be combined with a time-based splitting of a downlink subframe based on a system as at least partially set forth in IEEE 802.16e. These zones may contain bursts for transmission to non-Z capable mobiles and to Z-capable mobiles.

In order to save time-frequency resources, the proposal is to dynamically adjust the size of the zones. Also, the number of non-Z capable and Z capable terminals, served by a cell may be estimated. Based on this estimation, a currently static setting of the ratio between non-Z zones and Z zones may be set and/or adjusted in a dynamic way.

Preferably, the capabilities of the MSs are known at the entry procedure, mainly using SS Basic Capability REQ/RSP messages. The BS measures the channel and decides in a point-to-multipoint manner, which MS should be supplied with Z or with non-Z transmission format.

In an embodiment, said zone divides physical resources used for communication purposes in the communication network.

In another embodiment, the said physical resources comprise time and/or frequency slots assigned to communication links of the communication network.

As a further embodiment, said communication network is a WiMAX network. The Z zone may have a transmission format according to WiMAX. It is also an option that the Z zone is a WiMAX zone.

According to an embodiment, the Z zone comprises at least one of the following zones:

- an STC zone;
- an AMC zone;
- a combined STC-AMC zone.

Accordingly, said non-Z zone is no such STC, AMC and/or combined STC-AMC zone. The non-Z zone may in particular be or comprise a PUSC zone.

In a further embodiment, said zone is divided into a Z zone size and a non-Z zone size.

The Z zone size and the non-Z zone size may preferably result in a size of said zone.

It is also an embodiment that said Z zone and said non-Z zone are of different transmission formats.

According to an embodiment, each transmission format uses a feature set, wherein said feature set is preferably defined in the communication network.

It is another embodiment that a non-Z zone size is set based on the Z zone size. This may also apply the other way round, i.e., the Z zone size can be set based on the non-Z zone size.

According to yet an embodiment the Z zone size is set for at least one next frame.

The Z zone size may be set for several next frames, in particular DL frames conveying OFDMA symbols of user data.

In a further embodiment, said Z zone size is set by a base station supplying a cell.

In a next embodiment, said Z zone size is set based on traffic information.

It is also an embodiment that said Z zone size is set based on previous and/or future traffic from Z capable mobile stations and/or from non-Z capable mobile stations.

Pursuant to another embodiment, said Z size is set based on a base station configuration parameter.

Such parameter may in particular be set by an operator, which may in particular be based on a long term statistic comparing STC with non-STC traffic.

According to an embodiment, said Z zone size is set dynamically per base station based on a number of non-Z capable and/or on a number of Z capable mobile stations registered with the base station.

According to another embodiment, wherein said Z zone size is set dynamically per base station as a function of measured relative amounts of non-Z traffic and/or Z traffic in the past.

In yet another embodiment, said Z zone size is set on a frame-by-frame basis based on an actual non-Z and/or on Z resources' needs in the next frame.

According to a next embodiment, said Z zone size is set based on a data volume required and/or consumed by the Z capable and/or by the non-Z capable mobile stations.

Pursuant to yet an embodiment said Z zone size is iteratively adapted.

The problem stated above is also solved by a device comprising a and/or being associated with a processor unit and/or a hard-wired circuit and/or a logic device that is arranged such that the method as described herein is executable thereon.

According to an embodiment, the device is a communication device, in particular a or being associated with a base station or a base transceiver station. Said base station and/or base transceiver station in particular comprises a WiMAX functionality.

The problem stated supra is further solved by a communication system comprising the device as described herein.

Embodiments of the invention are shown and illustrated in the following figures:

Fig.3 shows a base transceiver station BTS supplying three sectors (cells) via logical base stations BS, wherein each cell may comprise at least one mobile station MS which is either STC capable or non-STC capable and/or at least one MS which is either AMC capable or non-AMC capable;

Fig.4 shows a downlink subframe comprising a preamble, a non-STC/non-AMC zone (also referred to as default PUSC zone) and an STC zone and/or AMC zone, wherein each of the zones are separated by an adjustable zone boundary.

It is noted that the example shown below refers to STC zones and/or non-STC zones. However, in a similar manner, this concept introduced is applicable to AMC zones and non-AMC zones.

It is further noted that the concept provided herein may apply to various "zones" that show similar characteristics as said STC zone and/or said AMC zone.

The approach provided herein suggests a dynamic, adaptive cell specific zone boundary based on the traffic situation on that particular cell. In case of high traffic load to STC capable terminals and low traffic load to non-STC capable terminals, the zone boundary is moved to increase the size of the STC zone thereby decreasing the size of the first mandatory PUSC zone. This concept applies vice-versa: If there is a high non-STC traffic load and a low STC traffic load, the first mandatory PUSC zone size is increased and the size of the STC zone is reduced.

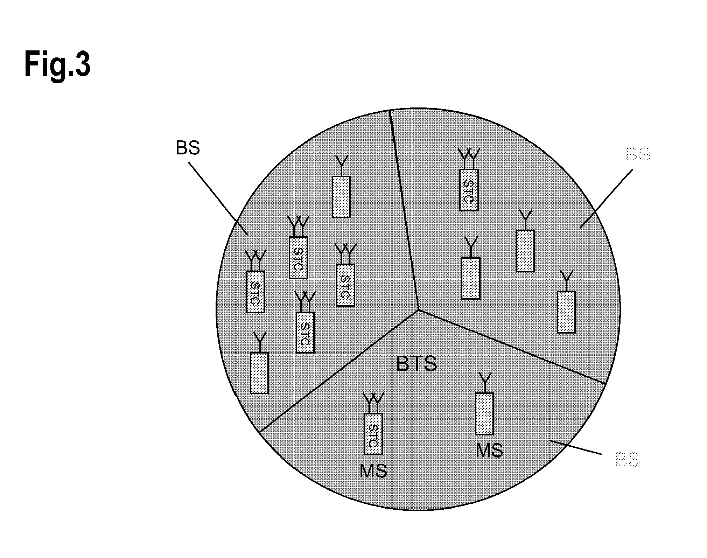

It is noted that herein base station also refers to a "logical base station" providing to the MS the MAC WiMAX counter part in the network side. On the other hand, one sector of a N-sector BTS is also referred to as "cell". Thus, in an exemplary case, a BTS may comprise three BSs (see **Fig.3**).

Hence, the STC zone size and the non-STC zone size can be set on a frame-to-frame basis according to an expected traffic in the cell from STC capable and non-STC capable MSs, respectively. The frequency of the adjustments may depend on different variants and implementations.

There may be several levels of adaptation to increase the performance to be processed by a zone manager functionality that manages the dynamic zone boundaries between the STC zone and the non-STC zone. In particular, the following levels of adaptation may apply:

(0) This level (0) may refer to a zone boundary that is based on an BS configuration parameter set by an operator, which may in particular be based on a long term statistic comparing STC and non-STC traffic.

(1) The BTS sets and/or adjusts the non-STC zone vs. the STC zone boundary dynamically per BS, based on a number of non-STC capable and on a number of STC capable MSs registered with the BS.

(2) The BTS sets and/or adjusts the non-STC zone vs. STC zone boundary dynamically per BS as a function of measured relative amounts of non-STC traffic and STC traffic in the past.

(3) The BTS sets and/or adjusts the non-STC vs. the STC zone boundary dynamically per BS on a frame-by-frame basis based on the actual non-STC and STC resources' needs in the next frame.

Note that any combination(s) of these levels of adaptation is/are possible, e.g., by deriving the initial STC zone boundary and/or the upper and lower limits of the zone boundary by a lower level's adaptation scheme and making fine adjustments by a higher level scheme. As an example, the combination of levels (1) and (2) may in particular be useful to allocate an STC zone if there is any STC capable MS registered in the cell.

Hereinafter, steps A to E are introduced to describe as how non-STC zone vs. STC zone adjustments can be made in particular for a next frame or for several next frames. A particular decision logic can be deployed to support such process. Exemplary, at the beginning only the first PUSC zone and none STC zone may exist (i.e. the size of the STC zone may initially be set to zero). However, any adaptation or adjustment can be processed starting with a different size of the STC zone as well.

The levels of adaptation described above can in particular be perceived within step A below.

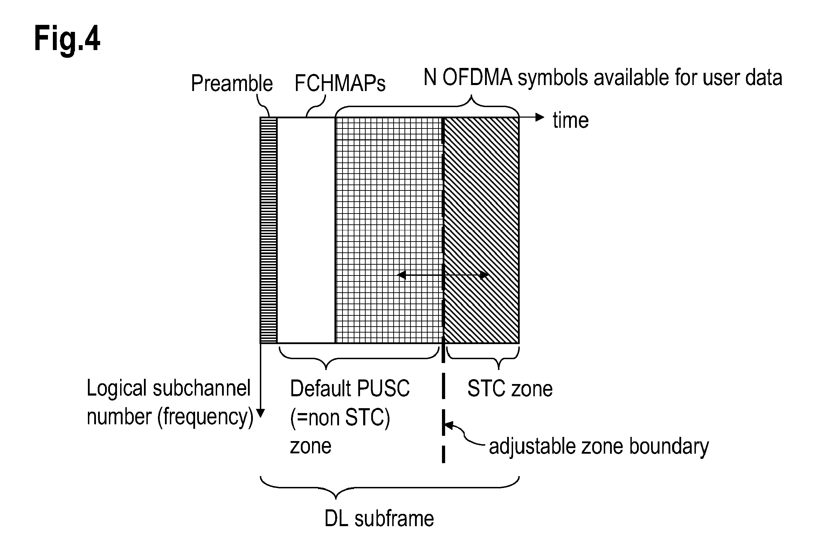

**Fig.4** shows a downlink DL subframe comprising a preamble, a non-STC zone (also referred to as default PUSC zone) and an STC zone, wherein both zones are separated by an adjustable zone boundary. The DL subframe may comprise N OFDMA symbols for user data. The number of OFDMA symbols needed for broadcast data and control data (Preamble, FCH, MAPs, UCD, DCD) may be estimated.

Step A

An expected fraction of STC resources needed in the next frame(s) relative to all resources in the next frame(s) is estimated as $F_{STC}$. The implementation of the Step A may depend on the levels of adaptation (1) to (3) mentioned above.

Step A, level (1) adaptation:

The BTS sets and/or adjusts the non-STC vs. STC zone boundary dynamically per BS, based on the number of non-STC capable and the number of STC capable MSs registered with the BS.

Once an MS registers with the BS, the capabilities of the MS are stored in the BTS data base, including its capability regarding STC. The BTS keeps track on the $M_{STC}$ and $M_{nonSTC}$, i.e. the number of STC capable MSs and the number of non-STC capable MSs respectively, registered at each BS. A number of total MSs is set to

$$M \ = \ M_{STC} \ + \ M_{nonSTC}.$$

Said fraction $F_{STC}$ is determined by

$$f_{STC} \ = \ M_{STC} \ / \ M.$$

The fraction $F_{STC}$ can be updated by the BTS for its BSs, e.g., when there is a MS entering the BS or leaving the BS. Additionally, the measurements of the values for $M_{STC}$, $M_{nonSTC}$, M and/or $F_{STC}$ can be filtered in an appropriate way, e.g., depending on configurable parameters for traffic observation time and frequency of zone size adjustments.

Possible approaches for collecting traffic information may include, e.g., average or moving average over C frames, IIR type filtering with memorizing factor D, etc.

Step A, level (2) adaptation:

The BTS sets and/or adjusts the non-STC zone vs. the STC zone boundary dynamically per BS as a function of measured relative amount of non-STC and STC traffic in the past.

A straightforward method is to measure the actual amount of slots S used in the past for STC zones $S_{STC}$ and for non-STC zones $S_{nonSTC}$. The total number of slots amounts to

$$S \ = \ S_{STC} \ + \ S_{nonSTC}$$

and the fraction $f_{STC}$ amounts to

$$f_{STC} \ = \ S_{STC} \ / \ S.$$

It is noted that a slot may represent the smallest physical resource allocation unit in WiMAX, e.g., one subchannel X 2 OFDMA symbols in DL PUSC. This works if the user data for STC capable MSs is allocated in the STC zone only.

Another possibility is to measure an actual amount of slots used by the STC capable MSs and by the non-STC capable MSs instead of the amounts of slot used in the STC and non-STC zones and set the zone sizes according to their proportion. This works even if the STC capable MSs are allocated every now and then to the non-STC zone (in case the STC zone is not sufficiently large).

Yet another possibility is to measure the data volumes required and/or consumed by the STC capable and by the non-STC capable MSs instead of said physical layer resource units (slots).

According to the level (1) adaptation, measurements of the quantities $S_{STC}$, $S_{nonSTC}$, S and/or $f_{STC}$ can be filtered in an appropriate way, e.g., depending on configurable parameters for traffic observation time and frequency of zone size adjustments. Traffic information may as well be gathered by considering, e.g., an average or a moving average over C frames, IIR type of filtering with memorizing factor D, etc.

Step A, level (3) adaptation:

The BTS sets and/or adjusts the non-STC vs. the STC zone boundary dynamically per BS on a frame-by-frame basis based on the actual non-STC and the STC resources' needs for the next frame(s).

A BTS packet scheduler may provide a (first) estimate of an amount of slots for user data given to each MS in the next frame. Such Packet scheduler can make the estimation for example

i) with information from higher layers based on a priority of PDUs from all MSs;

ii) by retrieving a modulation and coding scheme (MCS) used per MS from a BTS link adaptation functionality,

iii) according to a scheduling principle (e.g., a round robin or a proportional scheduling) and

iv) assuming the available slots in the next frame will be allocated up to a given maximum number of MSs per frame.

In the estimation above the packet scheduler may assume that all STC capable MSs can be allocated to an STC zone, either in a MIMO diversity or in a spatial multiplexing mode according to instructions from the link adaptation.

Based on the estimation on a higher layer, the BTS calculates a sum of number of slots estimated for non-STC capable MSs in the next frame $C_{nonSTC}$, and a sum of number of slots estimated for the STC capable MSs in the next frame $C_{STC}$.

According to adaptations set forth above, the total number of slots amounts to

$$C = C_{STC} + C_{nonSTC}$$

and the faction amounts to

$$f_{STC} = C_{STC} / C.$$

Step B

A (decimal) number of OFDMA symbols (based on a total number N of OFDMA symbols) required for the STC zone is determined according to

$$N'_{STC} = f_{STC} N.$$

Step C

The size of the STC zone $N_{STC}$ is determined as a number OFDMA symbols in the STC zone. In this Step C, there are two alternatives, Step Ca and Step Cb.

Step Ca, absolute:

The number of OFDMA symbols required for the STC zone $N'_{STC}$ may be rounded to the closest possible integer $N_{STC}$ of the STC zone size.

As an example, the minimum size for STC PUSC zone may amount to 4 OFDMA symbols, but the zone size may then equal 4, 6, 8, ... OFDMA symbols up to the maximum amount of OFDMA symbols permitted.

It is noted that other rounding schemes may apply, e.g., rounding to the largest possible zone size lower than or equal to $N'_{STC}$.

Step Cb, relative:

If the number of OFDMA symbols required for the STC zone $N'_{STC}$ exceeds the previous size of the STC zone by a threshold (e.g., by 1 OFDMA symbol), the size of the STC zone is increased by a particular step-size corresponding to a number of OFDMA symbols. If $N'_{STC}$ undershoots the previous size of the STC zone by a threshold (e.g., by 1 OFDMA symbol), the size of the STC zone is decreased by a particular step-size corresponding to a number of OFDMA symbols. In other cases, $N_{STC}$ may remain unchanged and amount to the same number of OFDMA symbols as for previous frames.

In Step C there may exist a minimum STC zone size $N_{STC,min}$ as a configurable input parameter. If, e.g.,

$$N'_{STC} < N_{STC,min},$$

no STC zone is allocated. On the other hand, a maximum STC zone size may also be provided as input parameter. If, e.g.,

$$N'_{STC} > N_{STC,max}$$

$N_{STC}$ is set to

$$N_{STC} = N_{STC,max}.$$

$N_{STC,max}$ may be needed if there is priority traffic expected from non-STC capable MSs.

Step D

Allocate the STC zone size as $N_{STC}$ OFDMA symbols and allocate the rest of the DL subframe for the first PUSC zone (and the other zones if needed). The STC zone is placed typically at the end of the DL subframe. The zone boundary is then provided between the first PUSC zone and the STC zone.

Step E

According to packet scheduling and frame allocation functionality of the BTS, the BTS allocates the data bursts of the STC capable MSs to the STC zone and the data bursts of the non-STC capable MSs to the non-STC zone(s). In Step E there are at least two alternative implementations:

Step Ea

Allocate data bursts from the STC capable MSs only to the STC zone and data bursts from the non-STC capable MSs only to the non-STC zone.

Step Eb

Allocate data bursts from the STC capable MSs only to the STC zone and data bursts from the non-STC capable MSs only to the non-STC zone. If there is still data in the buffers from STC capable MSs which did not fit into the STC zone and there is room in the non-STC zone, allocate the STC capable MSs also to the non-STC zone. Hence, traffic from STC capable MSs can be (in particular temporally) allocated to the non-STC zone.

It is noted that regarding level (3) adaptation (Step A, level (3) above), it is possible that not all MSs fit into the frame compared to the estimation which was used to decide the zone size. This may in particular be the case as the estimation may not consider limitations regarding a burst shape (rectangular) and empty spaces left in each zone after the real burst allocation has been done. This, however, is not a problem since the PDUs were anyway in priority order and the PDUs left over will be handled in the next scheduling round again.

Further Advantages:

The approach allows for optimizing a mobile WiMAX network capacity with unknown, mixed traffic from non-STC (=non-MIMO) and STC (=MIMO) capable MSs thereby decreasing CAPEX.

There is no need for manual optimization of the STC zone size which in return decreases OPEX.

**Abbreviations:**

| AMC | Advanced Modulation and Coding |
| BTS | Base Transceiver Station |
| $C_{nonSTC}$ | Sum of number of slots estimated for MSs not capable of STC |
| $C_{STC}$ | Sum of number of slots estimated for MSs capable of STC |
| FCH | Frame Control Header |
| $f_{STC}$ | expected fraction of STC resources needed in the next frame(s) relative to all resources in the next frame(s) |
| FUSC | Full Usage of Subchannels |
| MAC | Media Access Control |
| MCS | Modulation and Coding Scheme |
| MIMO | Multiple Input Multiple Output |
| $M_{nonSTC}$ | Mobile Station not capable of STC |

| MS | Mobile Station |
| $M_{STC}$ | Mobile Station capable of STC |
| OFDMA | Orthogonal Frequency Division Multiple Access |
| PUSC | Partial Usage of Subchannels |
| $S_{nonSTC}$ | Slots not capable of STC |
| $S_{STC}$ | Slots capable of STC |
| STC | Space Time Coding |
| WiMAX | Worldwide Interoperability for Microwave Access |

**Claims**

1. A method for adjusting an zone in a communication network,

   - said zone comprising a Z zone and a non-Z zone,
   - wherein one or both of the Z zone and the non-Z zone is or are dynamically adjusted.

2. The method according to claim 1, wherein said zone divides physical resources used for communication purposes in the communication network.

3. The method according to claim 2, wherein said physical resources comprise time and/or frequency slots assigned to communication links of the communication network.

4. The method according to any of the preceding claims, wherein said communication network is a WiMAX network, wherein the zone in particular comprises a transmission format according to WiMAX.

5. The method according to any of the preceding claims, wherein the Z zone comprises at least one of the following zones:

   - an STC zone;
   - an AMC zone;
   - a combined STC-AMC zone.

6. The method according to any of the preceding claims, wherein said zone is divided into a Z zone size and a non-Z zone size.

7. The method according to claim 6, wherein said Z zone and said non-Z zone are of different transmission formats.

8. The method according to claim 7, wherein each transmission format uses a feature set, wherein said feature set is preferably defined in the communication network.

9. The method according to any of claims 6 to 8, wherein a non-Z zone size is set based on the Z zone size.

cording to any of claims 20 or 21.

10. The method according to any of claims 6 to 9, wherein the Z zone size is set for at least one next frame.

11. The method according to any of claims 6 to 10, wherein said Z zone size is set by a base station supplying a cell.

12. The method according to any of claims 6 to 11, wherein said Z zone size is set based on traffic information.

13. The method according to any of claims 6 to 12, wherein said Z zone size is set based on previous and/or future traffic from Z capable mobile stations and/or from non-Z capable mobile stations.

14. The method according to any of claims 6 to 13, wherein said Z zone size is set based on a base station configuration parameter.

15. The method according to any of claims 6 to 14, wherein said Z zone size is set dynamically per base station based on a number of non-Z capable and/or on a number of Z capable mobile stations registered with the base station.

16. The method according to any claims 6 to 15, wherein said Z zone size is set dynamically per base station as a function of measured relative amounts of non-Z traffic and/or Z traffic in the past.

17. The method according to any of claims 6 to 16, wherein said Z zone size is set on a frame-by-frame basis based on an actual non-Z and/or on Z resources' needs in the next frame.

18. The method according to any of claims 6 to 17, wherein said Z zone size is set based on a data volume required and/or consumed by the Z capable and/or by the non-Z capable mobile stations.

19. The method according to any of claims 6 to 18, wherein said Z zone size is iteratively adapted.

20. A device comprising a and/or being associated with a processor unit and/or a hard-wired circuit and/or a logic device that is arranged such that the method according to any of the preceding claims is executable thereon.

21. The device according to claim 20, wherein said device is a communication device, in particular a or being associated with a base station or a base transceiver station.

22. Communication system comprising the device ac-

# Fig.1

## Logical subchannel number (frequency)

Preamble

FCH, MAPs

STC burst1

STC burst2

Default PUSC zone

STC zone

DL subframe

zone boundary

UL control

UL burst3

UL burst2

UL burst1

UL subframe

Time

# Fig.2

N OFDMA symbols available for user data

Time

Logical subchannel number (frequency)

Preamble

FCH, MAPs

Bursts for non-STC capable MSs, $S_{nonSTC}$ slots

Bursts for STC capable MSs, $S_{STC}$ slots

Empty space

Data from STC capable MSs, which did not fit into the STC zone.

Default PUSC zone (non STC)

STC zone

DL subframe

zone boundary

EP 2 144 470 A1

# Fig.3

**Fig.4**

Preamble    FCHMAPs    N OFDMA symbols available for user data

time

Logical subchannel number (frequency)

Default PUSC (=non STC) zone

STC zone

adjustable zone boundary

DL subframe

Europäisches
Patentamt

European
Patent Office

Office européen
des brevets

## EUROPEAN SEARCH REPORT

**Application Number**

EP 08 10 4468

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/022631 A (NORTEL NETWORKS LTD [CA]; MA JIANGLEI [CA]; JIA MING [CA]; TONG WEN [C] 1 March 2007 (2007-03-01) * page 2, line 20 - page 3, line 2 * * page 3, line 15 - page 4, line 6 * * page 5, line 9 - page 5, line 14 * * page 11, line 5 - page 11, line 22 * * page 20, line 31 - page 21, line 13 * * page 27, line 20 - page 27, line 29 * * page 46, line 30 - page 47, line 24 * * figure 1 * | 1-22 | INV. H04W72/04 |
| A | KAMBOUROV, I.: "MIMO Aspects in 802.16e WiMAX OFDMA"[Online] 22 November 2006 (2006-11-22), pages 1-30, XP002503018 Retrieved from the Internet: URL:http://www.ftw.at/ftw/events/tutorials %20a.%20workshops/20061122_Kambourov> [retrieved on 2008-11-07] * page 17 * | 1-22 | |
| A | EP 1 677 460 A (SAMSUNG ELECTRONICS CO LTD [KR]) 5 July 2006 (2006-07-05) * paragraphs [0008] - [0013] * * figure 2 * | 1-22 | TECHNICAL FIELDS SEARCHED (IPC) H04W H04L |
| A | US 2006/101168 A1 (ROH KWAN-HEE [KR] ET AL SEOK [KR] ET AL) 11 May 2006 (2006-05-11) * paragraphs [0063] - [0065] * * figure 6 * | 1-22 | |
| A | EP 1 890 443 A (FUJITSU LTD [JP]) 20 February 2008 (2008-02-20) * paragraphs [0040] - [0042] * | 1-22 | |

The present search report has been drawn up for all claims

| Place of search | Date of completion of the search | Examiner |
|---|---|---|
| Munich | 10 November 2008 | Goedhart, André |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 10 4468

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2008

| Patent document cited in search report | | Publication date | Patent family member(s) | | Publication date |
|---|---|---|---|---|---|
| WO 2007022631 | A | 01-03-2007 | EP | 1929803 A1 | 11-06-2008 |
| EP 1677460 | A | 05-07-2006 | CN | 101099363 A | 02-01-2008 |
| | | | JP | 2008522542 T | 26-06-2008 |
| | | | WO | 2006073258 A1 | 13-07-2006 |
| | | | KR | 20060079819 A | 06-07-2006 |
| | | | US | 2006148408 A1 | 06-07-2006 |
| US 2006101168 | A1 | 11-05-2006 | KR | 20060035892 A | 27-04-2006 |
| EP 1890443 | A | 20-02-2008 | JP | 2008048414 A | 28-02-2008 |
| | | | KR | 20080016458 A | 21-02-2008 |
| | | | US | 2008045174 A1 | 21-02-2008 |

For more details about this annex : see Official Journal of the European Patent Office, No. 12/82